# EUROPEAN PATENT SPECIFICATION

(11) **EP 3 211 330 B1**
(45) Date of publication and mention of the grant of the patent: **30.04.2025**
(21) Application number: 17157439.5
(22) Date of filing: 22.02.2017
(51) Int. Cl.: F24D 19/08, B01D 19/00, F24D 19/10

(54) **A METHOD AND DETECTOR FOR DETECTING AIR BUBBLES OR AIR POCKETS IN A SYSTEM, AS WELL AS AN INSTALLATION WHICH CONTAINS SUCH A DETECTOR**
VERFAHREN UND DETEKTOR ZUM ERFASSEN VON LUFTBLASEN ODER LUFTTASCHEN IN EINEM SYSTEM SOWIE EINE ANLAGE, DIE EINEN SOLCHEN DETEKTOR ENTHÄLT
PROCÉDÉ ET DÉTECTEUR POUR DÉTECTER DES BULLES D'AIR OU DES POCHES D'AIR DANS UN SYSTÈME, AINSI QU'UNE INSTALLATION QUI CONTIENT UN TEL DÉTECTEUR

(30) Priority: 25.02.2016 BE 201605138
(43) Date of publication of application: 30.08.2017
(73) Proprietor: Sercal Belgium BV, 2170 Merksem (BE)
(72) Inventor: WILLEMEN, Karl, 2170 Merksem (BE)
(74) Representative: Bureau M.F.J. Bockstael NV

(56) References cited:
- EP-A1- 0 292 814
- EP-A1- 0 580 881
- EP-A1- 0 663 570
- EP-A1- 2 918 923
- EP-A2- 0 924 472
- DE-A1- 102004 014 859
- DE-A1- 19 810 005

## Description

The present invention first and foremost relates to a method for the automatic detection of air bubbles, air pockets, air locks, air accumulations or circulating free gas bubbles in a system, in particular in a hydronic system.

More specifically the invention relates to such a method for application in a system in which a liquid is pumped around by a circulation pump during the use thereof and whereby such a system is provided with a closed circuit formed by liquid pipes and/or equipment such that the liquid can flow, and whereby an expansion tank is connected to the closed circuit to accommodate volume changes in the liquid.

Such a system can be formed for example by an installation such as a heating installation or a cooling installation, of for example an HVAC installation.

It is known that in such systems or installations, air in the liquid pipes or radiators can interfere with the good operation thereof.

Air bubbles or air pockets in pipes of a system in which a liquid is pumped around are very harmful to the circulation pump and can cause corrosion of the pipes and radiators, for example.

Moreover, it can be a cause of total failure of the installation.

For example, due to air pockets in the system, an efficient delivery of heat to a radiator can be prevented, such that the desired heating in the space concerned cannot be realised.

In order to examine whether there is possibly a case of air pockets in a system or installation, no other methods or means are available than manually trying to vent off air at places where it could have accumulated.

The known automatic air vents do not provide an adequate solution. The known automatic air vents can indeed remove air pockets under certain conditions. To this end the connection opening of the air vent must be sufficiently large, and there must be an overpressure with respect to the atmosphere, otherwise the automatic air vent will even draw air in. Moreover, the overpressure present at the air vent will decrease due to the removal of the trapped air, such that at another time (after cooling for example) the risk of underpressure (and drawing air in again) even increases.

Often no action is taken until the operation of the installation noticeably deteriorates or because the flow of the liquid in the liquid pipes or radiators or other equipment is coupled with an annoying bubbling noise caused by the air pockets.

However, such late intervention can be very harmful for the installation.

Moreover, the known methods are very laborious, whereby equipment must be vented manually with suitable venting keys, the liquid in the installation must be topped up, whereby it is generally not very clear for a person who performs these operations whether the procedure performed has adequately removed the air pockets in the installation.

Known methods with a similar purpose are described in EP0924472A2 and in EP0663570A1. The essence of these methods lies in the fact that a pressure change is obtained by a pump adding water to the liquid circuit, or by water being removed from the liquid circuit via a valve.

The pressure of the system is thus intentionally influenced.

As water is essentially incompressible, the rate of change of the system pressure is an indication of the possible presence of gas bubbles in the system.

Hence the measuring principle as described in EP0924472A2 and EP0663570A1 is based on the fact that a minimal quantity of water is added or released, and that this is initiated by a signal.

However, the present invention is aimed at keeping the system pressure unchanged and preventing the addition and/or removal of liquid to or from the system.

The purpose of the present invention is thus to provide a solution to one or more of the aforementioned and/or other problems.

More specifically, it is an objective of the invention to obtain a method that enables the presence of air pockets or air bubbles in the system to be automatically detected. Another objective of the invention is that upon detecting of air pockets in the system, an action is automatically taken that can consist of a notification or generating an alarm, or actually intervening in the system, for example by stopping the installation or by automatically removing the air pockets present.

To this end the present invention concerns a method for automatically detecting air bubbles or air pockets in a system comprising the features of claim 1.

A great advantage of a method according to the invention is that an indication can be obtained, in a very simple way, about the presence or otherwise of air pockets or air bubbles in the system.

According to a method in accordance with the invention it is possible to detect air pockets in the system by measuring the pressure at the expansion tank of the system at regular points in time.

Indeed, as is known, in a system referred to here, an expansion tank is normally incorporated in order to be able to guarantee the maintenance of a defined pressure and also to be able to accommodate volume changes of the liquid present in the system, for example as a result of cooling or heating of the liquid.

This is necessary as in contrast to gases, liquids are incompressible such that it is impossible, for example, to keep the volume of the liquid constant in the event of a rising temperature by compressing the liquid, which is indeed possible with a gas.

Such an expansion tank is essentially a generally metal tank with a constant volume that is connected to the liquid pipes of the system and whereby the liquid in the expansion tank is separated from a gas phase by a flexible membrane.

In this way, in the event of a volume change of the liquid in the system, liquid can flow in or out of the expansion tank, whereby a simultaneous deformation of the membrane occurs.

It is characteristic of such an installation with an expansion tank that the pressure in the liquid is equal to the pressure in the gas phase, and this both in the static situation of the system and when the circulation pump is started up and liquid is pumped around through the system.

In the jargon it is then said that the expansion tank determines the "null point" of the installation, which means that the expansion tank determines the pressure in the liquid pipe to which it is connected, whereby this pressure at the "null point" is of course not "zero".

The pressures at other locations in the system can be determined by starting with the pressure at the null point and taking account of the lift head of the circulation pump on the one hand (pump curve), and the pressure losses in the installation on the other hand (pipe resistance curve).

For example in the event of a flow of the liquid through a pipe of a certain diameter and at a certain speed or flow rate, 'friction losses' occur as a result of friction, which can differ considerably depending on the shape of the pipe, straight or curved.

In brief per metre of length, the pressure in the pipe falls in a calculable way so that the pressure can be determined at any arbitrary distance from the null point on the basis of the knowledge of the friction losses.

In this way the pressure losses specific to the installation can be mapped out in a 'pipe resistance curve'.

Similarly, it is possible to determine the pressure before and after the circulation pump as a function of the head pressure realised, characterised by the curve of the pump that determines the relationship between the flow supplied and the lift head supplied.

The pressure at the "null point" can shift somewhat on account of the expansion or contraction of the liquid in the system in the event of heating or cooling, as this is coupled with a volume decrease or a volume increase respectively of the gas phase resulting in a respective pressure increase and a pressure decrease.

However, it is clear that such a volume change of the liquid in the system due to cooling or heating is far from instantaneous and takes a reasonably large amount of time.

The same applies to a change of the volume of liquid present in the system on account of smaller leaks in the system.

The foregoing is true insofar the liquid pipes and equipment of the system are correctly filled with liquid.

On the other hand, when air bubbles or air pockets are present in the system, then when starting up or stopping the system by activating or deactivating the circulation pump, strong fluctuating pressure changes will occur in the liquid pipes, and more specifically also at the location of the "null point" at the expansion tank.

The reason for this is that the air pockets and air bubbles in the system form compressible or expandable parts in the pipes and equipment of the system, such that setting the liquid in motion or stopping the motion of the liquid is coupled with transitional phenomena that differ considerably from a normally filled operating condition of the system.

Consequently, according to the invention, by taking measurements of the pressure at the location of the "null point", or thus at the expansion tank, it can be correctly detected whether or not there are air bubbles or air pockets in the system.

It is hereby sufficient to conduct an analysis upon detection of a pressure change at the expansion vessel.

As demonstrated, in normal circumstances, more specifically in circumstances whereby the pipes and equipment of the system are correctly filled, the pressure at the "null point" barely changes, if at all, neither in the static situation of the system nor during a normal operation thereof, and if the pressure does change, this occurs very slowly under the effect of heating or cooling.

It can thus be concluded that as long as no or only slow pressure changes occur at the "null point" there is no problem with air pockets or air bubbles in the system.

On the other hand, if a pressure change is observed at the null point, there is possibly, but not necessarily, something wrong.

In order to give a definite answer as to whether the measured pressure change or pressure changes are due to air bubbles or air pockets in the event of an abnormally filled operating condition of the system, or correspond to pressure changes as a result of heating or cooling of the liquid in the system in the case of a normally filled operating condition of the system, according to the invention the analysis takes account of parameters of the system that relate to such pressure changes at the location of the expansion tank.

According to the invention, such parameters of the system that are involved in the analysis step can be one or more of the following parameters for example:
- the magnitude or amplitude of one or more measured pressure changes;
- the magnitude or amplitude of one or more measured pressure changes divided by the time that has lapsed between successive measurements of a pressure change;
- a measured temperature change of the liquid; and/or
- an operating condition of the circulation pump.

This list is not exhaustive and many other parameters relating to a pressure change at the location of the expansion tank can also be taken into account according to the invention for the interpretation of a measured pressure change or pressure changes at the "null point".

Practice shows the way in which such parameters are best taken into account and this can differ from system to system.

In a possible embodiment, the analysis step of the method according to the invention can consist of checking whether the magnitude of the measured pressure change within certain bounds corresponds to a measured temperature change of the liquid in the system to thus decide whether the system is in a normally filled operating condition, or in a condition whereby air pockets are present.

In another possible embodiment the analysis step of the method according to the invention can consist of taking account of the change of successive pressure changes at the expansion tank as a function of time.

Thus for example the irregularity of this change, or precisely the lack of an irregular pattern in this change, can be used as a determining parameter for drawing a conclusion regarding the presence of air pockets in the system.

It is clear that such a method according to the invention enables air pockets or air bubbles to be detected in the system at a very early stage with simple means and automatically.

In a preferred method according to the invention the method comprises the step of defining a normally filled operating condition of the system by determining within what bounds certain parameters of the system may vary, whereby these parameters relate to pressure change at the expansion tank in the absence of or with an acceptable quantity of air bubbles or air pockets in the system, whereby such a pressure change can occur on account of an increase or decrease of the liquid volume in the system upon a temperature change and/or by the addition or loss of liquid in the system by topping up or leakage.

It goes without saying that the correct definition or determination of the bounds within which the monitored parameters of the system that relate to a pressure change at the expansion tank may vary for there to be a case of a normally filled operating condition of the system.

Preferably the primary focus here is on parameters of the system that present a very clearly different change depending on whether the system is correctly filled with liquid, or contains air pockets or air bubbles.

Thus the sensitivity of the method for detecting air pockets or air bubbles in the system is greatly increased.

According to the method according to the invention, upon the occurrence of a pressure change at the expansion tank an operating condition of the circulation pump is simultaneously determined, that can be one or more of the following operating conditions:
- the start-up of the circulation pump;
- the stoppage of the circulation pump;
- when the circulation pump is stationary; and/or
- the operation of the circulation pump at normal speed or nominal power.

The operating condition of the circulation pump is an important parameter that can also be involved in the analysis step, and the determination of the operating condition of the circulation pump can be easily done by measuring the change of the electric current of a driving electric motor of the circulation pump, for example.

The invention also relates to a detector for detecting air bubbles or air pockets configured to carry out the method of one of claims 1 to 11.

Characteristic of such a detector according to the invention is the fact that the detector at least comprises the following elements:
- a pressure transducer by which the pressure at the location of the expansion tank can be measured at regular points in time;
- comparator means for detecting a pressure change at the expansion tank measured with the pressure transducer;
- determination means for determining parameters of the system that relate to a pressure change or pressure changes at the expansion tank;
- analysis means that are activated upon detection of a pressure change by the comparator means, and with which it can be examined whether the parameters determined with the determination means lie within the bounds that correspond to a normally filled operating condition of the system; and
- output means for generating an output to a user as a function of the analysis done.

With a detector according to the invention air bubbles and air pockets can be automatically detected according to a method that has already been described above, and the advantages of such a detector are thus of the same nature, i.e. the detection of air bubbles in the system can be done permanently and automatically and no human intervention is required, such that abnormal operating conditions can be identified early so that damage to the system or an inefficient operation thereof can be prevented.

The invention also relates to an installation that comprises a detector according to the invention as described above.

With the intention of better showing the characteristics of the invention, a preferred embodiment of a method and a detector according to the invention for detecting air bubbles or air pockets in a system, as well as an installation according to the invention that contains such a detector, are described hereinafter by way of an example without any limiting nature, with reference to the accompanying drawings, wherein:
figure 1 schematically shows a possible installation in which the invention can be applied, more specifically in a static situation of the installation, whereby the pressure change over the different parts of the installation is also shown;
figure 2 schematically shows the same installation, this time during the operation thereof, whereby the pressure change over the different parts of the installation are also shown in the case whereby the installation is filled with liquid in a normal way;
figure 3 schematically shows a possible embodiment of an installation according to the invention that is also provided with a detector according to the invention; and
figure 4 schematically shows an enlarged possible embodiment of the detector and some parts of the installation of figure 3.

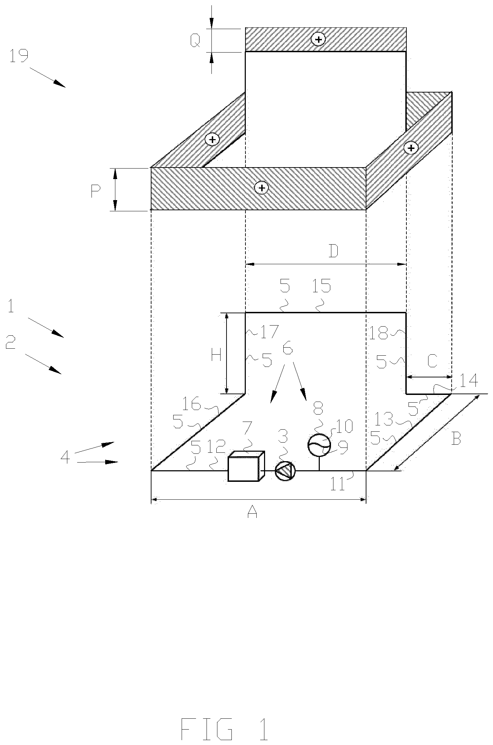

The installation 1 illustrated in figure 1 is a heating installation 1 that forms a system 2 in which a liquid, generally water, is pumped around by a circulation pump during the use thereof.

The installation 1 is provided with a closed circuit 4 formed by liquid pipes 5 and equipment 6 such that the liquid can flow.

Of course, in other cases such a system can comprise a number of closed circuits 4.

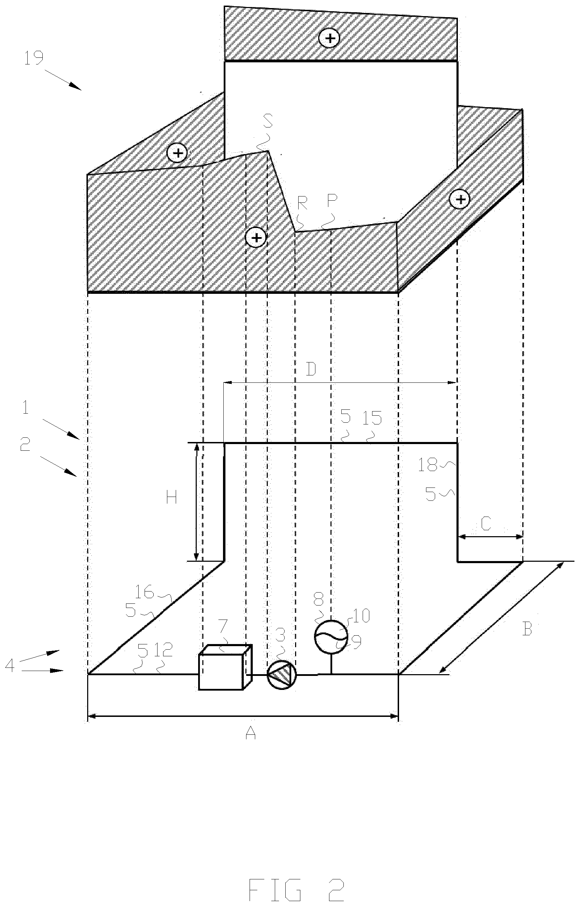

More specifically, the closed circuit 4 shown in figure 1 comprises equipment 6 in a configuration that is highly usual, whereby downstream, after the circulation pump 3, first a boiler 7 is incorporated in the circuit 4 with which the liquid can be heated and whereby after the boiler 7 further heat-emitting equipment such as radiators, that are not shown in further detail in figures 1 and 2, can be incorporated in the liquid pipes 5.

Furthermore, upstream, before the circulation pump 3, an expansion tank 8 is connected to the closed circuit 4 to accommodate volume changes of the liquid in the liquid pipes 5 and/or equipment 6, for example as a result of a temperature increase or temperature decrease of the liquid.

Preferably the expansion tank 8 is indeed set up on the intake side of the circulation pump 3, because in this way a minimum pressure is assured on the intake side so that pump cavitation can be prevented.

The expansion tank 8 contains a membrane 9 that separates the liquid phase from a gas 10.

Such a membrane 9 is generally not resistant to very high temperatures and hence the expansion tank 8 is also preferably connected to a return pipe 11 that leads to the boiler 7, as the liquid temperature is the lowest there.

The lifetime of the membrane 9 can thus be extended.

However, other configurations according to the invention are not excluded and can be realised with observance of the various aforementioned and any other principles.

In the case of figures 1 and 2 there are sections 12 to 16 of the liquid pipes 5 that are arranged horizontally and sections 17 and 18 that extend in a vertical direction.

The sections 17 and 18 have a length H and extend on either side of the section 15 that extends horizontally over a length D at a height H above the other horizontal sections 12, 13, 14 and 16.

The other horizontal sections 12, 13, 14 and 16 have a length A, B, C and B respectively.

The top section of figure 1 is a schematic presentation 19 of the pressure profile in the system 2 when the circulation pump 3 is not activated.

In this static situation a pressure P prevails in the horizontal sections that is greater than the pressure Q in the horizontal section 15 that is located at a height H.

Suppose that in the section 10 of the expansion tank 8 that is filled with a certain gas, a certain starting pressure initially prevails, then the pressure P is equal to this starting pressure plus the hydrostatic pressure of a liquid column of height H.

The other way around the pressure Q in the higher horizontal section is equal to the pressure P less the hydrostatic pressure of the liquid column of height H.

The installation 1 is again shown in figure 2, however this time after starting up the circulation pump 3.

Due to the work done by the circulation pump 3 on the liquid, the pressure R in the liquid on the intake side is increased to a pressure S on the pressure side of the circulation pump 3.

In the remaining sections of the closed circuit 4, this liquid pressure slowly falls due to friction losses in the boiler 7 and in the liquid pipes 5 and any other equipment 6 such as radiators and similar until the pressure has again fallen from the pressure S on the pressure side of the circulation pump 3 to a pressure R on the intake side of the circulation pump 3.

However, it is essential to understand that in the liquid pipe 11 or 12 to which the expansion tank 8 is connected, at the location of this expansion tank a pressure P prevails, which, in normal circumstances whereby the system is well filled with liquid, is exactly the same pressure P as was the case in the static situation of the system 2.

For this reason it is said that the expansion tank 8 sets the "null point" P of the system.

After the circulation pump 3 has operated for some time and the liquid in the boiler 7 has gradually heated up, the liquid undergoes an expansion and the pressure in the section 10 of the expansion tank 8 will increase somewhat, so that the "null point" will shift somewhat.

However, this is a phenomenon that takes place reasonably slowly and can easily be identified by monitoring the temperature increase in the liquid, as well as the magnitude of the pressure increase at the expansion tank 8.

A similar situation can occur when the system 2 is topped up with liquid, whereby again a pressure increase takes place in the expansion tank 8, which however again develops more slowly than is the case when starting up the circulation pump 3 when air pockets are present in the system 2.

If there are air pockets or air bubbles in the system 2, when starting up the circulation pump a transitional phenomenon will occur, whereby the pressure at the expansion tank 8 can vary considerably and quickly in a way that completely differs from the normal pressure increase that is observed with a normally filled operating situation of the system 2.

It is according to this principle that a method and a detector according to the invention will operate.

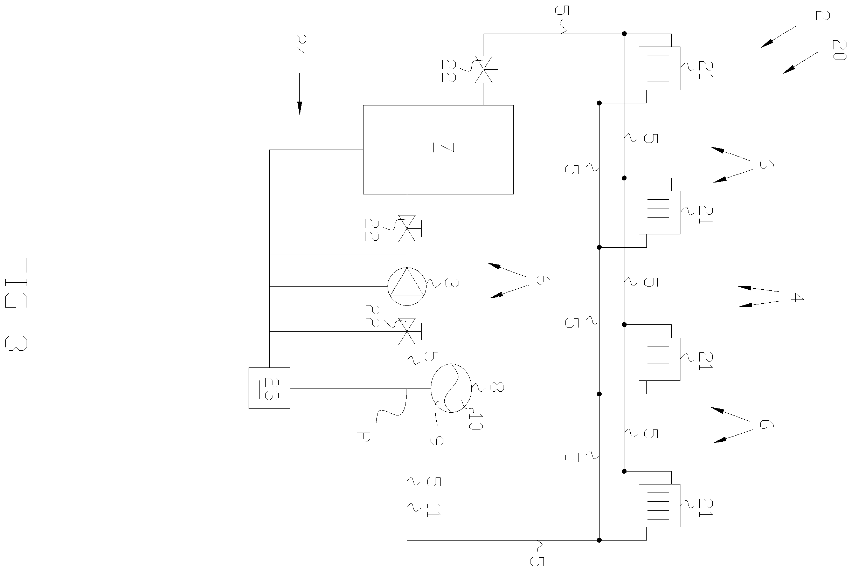

Figure 3 shows an installation 20 according to the invention that is largely the same as in the previous drawings as it again concerns a heating installation 20 that is formed by a system 2 in which a liquid is pumped around in a closed circuit 4 by means of a circulation pump 3.

Equipment 6 is incorporated in the closed circuit 4, more specifically an expansion tank 8, a boiler 7 and some radiators 21, as well as some shut-off valves 22.

Typical of the installation 20 according to the invention is that it is provided with a detector 23 according to the invention that is provided with sensors and cables or pipes 24 by which the detector 23 is connected to the system 2.

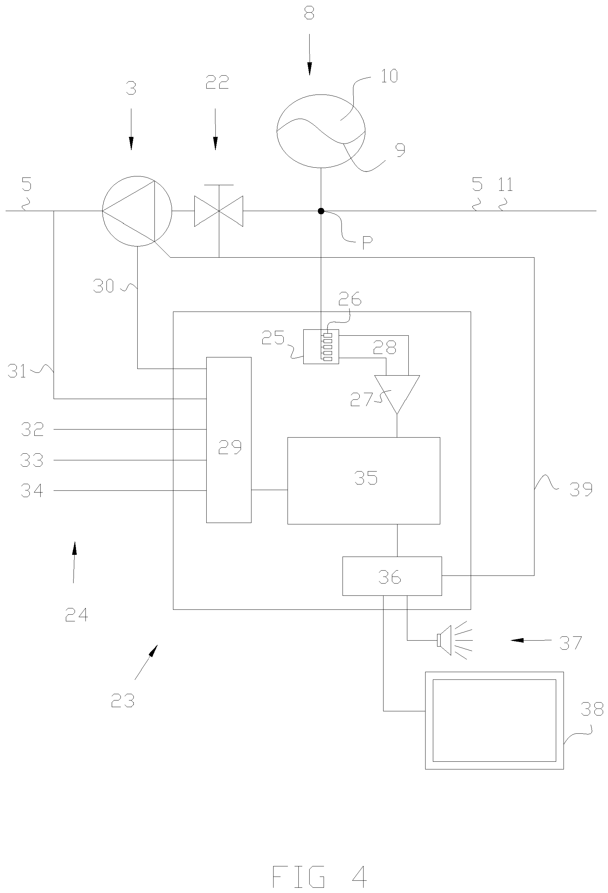

A possible embodiment of such a detector 23 according to the invention is illustrated in more detail in figure 4.

The detector 23 is of course intended for the automatic detection of the presence of air bubbles or air pockets in the system 2.

The detector 23 hereby automatically executes a method according to the invention and to this end the detector 23 is provided with a number of elements.

First and foremost the detector 23 is provided with a pressure transducer 25 with which the pressure P can be measured at the location of the expansion tank 8 at regular points in time, for example every second.

The pressure transducer 25 can for example be an electronic pressure transducer 25 that also contains an electronic memory 26 for storing a number of measurement results measured with the pressure transducer 25.

Moreover, the detector 23 comprises comparator means 27 for detecting a pressure change at the expansion tank 8 measured with the pressure transducer 25.

Hereby the comparator means 27 are connected to the pressure transducer 25, such that a number of successive measurements measured by the pressure transducer 25 can be compared to one another.

Typically the comparator means 27 consist of an electronic circuit and connecting elements 28 that enable this.

Moreover, the detector 23 contains determination means 29 for determining parameters of the system that relate to a change of the pressure P at the expansion tank 8.

Such determination means 29 can be implemented in highly diverse ways according to the parameters of the system 2 that must be monitored.

In the example shown, the determination means 29 are formed for example by an electronic circuit that is provided with a number of inputs 30 to 34 that can be connected to sensors and similar.

For example, there is a sensor 30 with which the operating condition of the circulation pump 3 can be measured, either the start-up or stoppage thereof, or the normal operation thereof or when it is stationary.

Moreover, in the case of figure 4 a sensor 31 is provided with which the temperature of the liquid can be measured.

Other inputs 32 to 34 can be connected to a clock for example, another piece of equipment in the system, such as the boiler 7 or a radiator 12 or shut-off valves 22 and similar.

In other sections of the determination means 29 a calculation can simply be done, for example.

The purpose of the determination means 29 consists of determining parameters of the system that upon a change of the pressure P at the expansion tank 8 can give an indication of whether this pressure change is due to a normal volume change of the liquid in the system 2 or must be attributed to air pockets and air bubbles in the system 2.

The detector 23 is further provided with analysis means 35 that are activated upon detection of a pressure change by the comparator means 27.

With the analysis means 35 it can be checked whether the parameters determined with the determination means 29 lie within the bounds that correspond to a normally filled operating condition of the system 2.

The analysis step can for example consist of checking whether the magnitude of a measured pressure change at the expansion tank 8 exceeds a certain limit value.

In another case or in combination with the foregoing, during the analysis step it can be verified whether the magnitude or amplitude of one or more measured pressure changes at the expansion tank 8 divided by the time that has lapsed between successive measurements of a pressure change at the expansion tank 8 exceeds a certain limit value.

In other cases, the operating condition of the circulation pump 3 or the measured temperature difference in the liquid can also be taken into account.

The possibilities are highly diverse and can vary greatly as a more or less sophisticated detector 23 is developed.

In the more complex embodiments of a detector 23 according to the invention, a number of measurements of a pressure change at the location of the expansion tank 8 are involved in the analysis step.

It is also possible to measure a signal of the pressure at the expansion tank 8, whereby signal processing techniques are applied to analyse the measured signal and to calculate or determine the aforementioned parameters for the analysis step.

For example, such signal processing can consist of breaking down the measured signal into its frequency components and comparing them to what is known about a signal that corresponds to a normally filled operating condition of the system 2.

The detector 23 is further equipped with output means 36 for generating an output to a user as a function of the analysis done with the analysis means 35.

In the example shown the output means 36 provide an input to an alarm system 37 for generating an alarm upon the detection of air bubbles or air pockets in the system 2.

A monitor 38 is also provided on which the results of the analyses done can be shown.

For example, on the basis of the measured parameters an indication or estimate can be given of the magnitude of the problem, for example an estimate of the volume of the air pockets present on the basis of the magnitude of the amplitude of a measured pressure change at the expansion tank 8.

The generation of an output with the output means 36 can also consist of automatically acting on the system 2, for example by automatically stopping the system 2.

This can be done for example by stopping the electricity supply to the circulation pump 3 via an output 39 of the output means 36 and/or closing a shut-off valve 22 and similar.

In another embodiment, it can directly act on the system 2 by automatically venting the system 2 for example.

## Claims

1. Method for automatically detecting air bubbles or air pockets in a system (2) wherein is incorporated an expansion tank (8) and in which system (2) a liquid is pumped around by a circulation pump (3) during the use thereof, whereby such a system (2) is provided with a closed circuit (4) formed by liquid pipes (5) and/or equipment (6) such that the liquid can flow, whereby the circulation pump (3) is placed in the closed circuit (4), whereby the equipment (6) comprises a boiler (7) placed after the circulation pump (3), and whereby the expansion tank (8) is connected to the closed circuit (4) to accommodate volume changes of the liquid, **characterised in that** the method is an automatic method that at least consists of:
- measuring the pressure (P) at the location of the expansion tank (8) at regular points in time, and this with an unchanged quantity of liquid in the closed circuit (4);
- upon the occurrence of a pressure change at the expansion tank (8), conducting an analysis that consists of examining whether one or more parameters of the system (2) that relate to one or more measured pressure changes are within certain bounds that correspond to a normally filled operating condition of the system (2); and,
- generating an output as a function of the analysis done,
whereby upon the occurrence of a pressure change at the expansion tank (8), an operating condition of the circulation pump (3) is simultaneously determined, that can be one or more of the following operating conditions:
- the start-up of the circulation pump (3);
- the stoppage of the circulation pump (3);
- when the circulation pump is stationary (3); and/or
- the operation of the circulation pump (3) at normal speed or nominal power.

2. Method according to claim 1, **characterised in that** the method comprises the step of defining a normally filled operating condition of the system (2) by determining within what bounds certain parameters of the system (2) may vary, whereby these parameters relate to a pressure change at the expansion tank (8) in the absence of or with an acceptable quantity of air bubbles or air pockets in the system (2), whereby such a pressure change can occur on account of an increase or decrease of the liquid volume in the system (2) upon a temperature change and/or by the addition or loss of liquid in the system (2) due to topping up or leakage.

3. Method according to one or more of the previous claims, **characterised in that** the parameters of the system (2) that are involved in the analysis step can be one or more of the following parameters:
- the magnitude or amplitude of one or more measured pressure changes;
- the magnitude or amplitude of one or more measured pressure changes divided by the time that has lapsed between successive measurements of a pressure change;
- a measured temperature change of the liquid; and/or,
- an operating condition of the circulation pump (3).

4. Method according to one or more of the previous claims, **characterised in that** during the analysis step it is checked whether the magnitude of a measured pressure change exceeds a certain limit value.

5. Method according to one or more of the previous claims, **characterised in that** the magnitude or amplitude of one or more measured pressure changes divided by the time that has lapsed between successive measurements of a pressure change exceeds a certain limit value.

6. Method according to one or more of the previous claims, **characterised in that** a number of measurements of a pressure change at the location of the expansion tank (8) are involved in the analysis step.

7. Method according to one or more of the previous claims, **characterised in that** a signal is measured of the pressure (P) at the expansion tank (8), whereby signal processing techniques are used to analyse the measured signal and to determine or calculate the aforementioned parameters for the analysis step.

8. Method according to one or more of the previous claims, **characterised in that** the signal processing consists of breaking down the measured signal into its frequency components.

9. Method according to one or more of the previous claims, **characterised in that**, in the case whereby the measured pressure change or pressure changes at the expansion tank (8) do not correspond to a normally filled operating condition of the system (2), the generation of an output consists of one or more of the following possibilities:
- the generation of an alarm;
- acting on the system (2) by venting it automatically;
- acting on the system (2) by automatically stopping it.

10. Method according to one or more of the previous claims, **characterised in that** the generation of an output consists of generating an indication on a monitor (38) or screen for a user regarding the analysis done.

11. Method according to one or more of the previous claims, **characterised in that** the system (2) to which the method is applied is formed by an installation (1) that is one of the following or a combination thereof:
- a heating installation (1);
- a cooling installation; and,
- an HVAC installation.

12. A detector (23) for automatically detecting air bubbles or air pockets configured to carry out the method of one of claims 1 to 11, **characterised in that** the detector (23) at least comprises the following elements;
- a pressure transducer (25) with which the pressure (P) at the location of the expansion tank (8) can be measured at regular points in time;
- comparator means (27) for detecting a pressure change at the expansion tank (8) measured with the pressure transducer (25);
- determination means (29) for determining parameters of the system (2) that relate to a pressure change or pressure changes at the expansion tank (8) with an unchanged quantity of liquid in the closed circuit (4);
- analysis means (35) that are activated upon detection of such a pressure change by the comparator means (27), and with which it can be examined whether the parameters determined with the determination means (29) lie within the bounds that correspond to a normally filled operating condition of the system (2); and
- output means (36) for generating an output to a user as a function of the analysis done.

13. A detector (23) according to claim 12, **characterised in that** the determination means (29) comprise measuring equipment that enables one or more of the following parameters of the system to be measured and recorded:
- the magnitude or amplitude of one or more measured pressure changes;
- the magnitude or amplitude of one or more measured pressure changes divided by the time that has lapsed between successive measurements of a pressure change;
- a measured temperature change of the liquid; and/or,
- an operating condition of the circulation pump (3).

14. An installation (1), **characterised in that** it at least comprises a detector (23) according to claim 12 or 13.

## Patentansprüche

1. Verfahren zum automatischen Erkennen von Luftblasen oder Lufttaschen in einem System (2), in das ein Ausdehnungsgefäß (8) eingebaut ist, und einem System (2), in das eine Flüssigkeit über eine Umwälzpumpe (3) gepumpt wird, wenn das System verwendet wird; wobei ein solches System (2) mit einem geschlossenen Kreislauf (4) ausgestattet ist, der durch Leitungen (5) und/oder durch eine Ausrüstung (6) für Flüssigkeiten gebildet wird, so dass die Flüssigkeit fließen kann; wobei die Umwälzpumpe (3) in dem geschlossenen Kreislauf (4) angebracht ist; wobei die Ausrüstung (6) einen Kessel (7) umfasst, der nach der Umwälzpumpe (3) angebracht ist; und wobei das Ausdehnungsgefäß (8) mit dem geschlossenen Kreislauf (4) verbunden ist, um Änderungen im Volumen der Flüssigkeit zu berücksichtigen; **dadurch gekennzeichnet, dass** das Verfahren ein automatisches Verfahren ist, das zumindest aus folgendem besteht:
- dem Messen des Drucks (P) an der Stelle, an der sich das Ausdehnungsgefäß (8) befindet, zu regelmäßigen Zeitpunkten, und zwar bei einer unveränderten Menge an Flüssigkeit im geschlossenen Kreislauf (4);
- bei Vorliegen einer Druckänderung an dem Ausdehnungsgefäß (8) eine Analyse durchführen, die dazu bestimmt ist, zu untersuchen, ob ein oder mehrere Parameter des Systems (2), die sich auf eine oder mehrere gemessene Druckänderungen beziehen, innerhalb bestimmter Grenzen liegen, die einem Zustand des aktivierten Systems (2) entsprechen, das normal gefüllt ist; und
- dem Erzeugen einer Ausgabe in Abhängigkeit von der durchgeführten Analyse;
wobei bei Vorliegen einer Druckänderung an dem Ausdehnungsgefäß (8) gleichzeitig ein Betriebszustand der Umwälzpumpe (3) bestimmt wird, der einen oder mehrere der nachfolgend aufgeführten Betriebszustände darstellen kann;
- das Starten der Umwälzpumpe (3);
- das Anhalten der Umwälzpumpe (3);
- einen Zustand, in dem die Umwälzpumpe stationär ist (3);
und/oder
- das Betreiben der Umwälzpumpe (3) mit einer normalen Geschwindigkeit oder mit einer Nennleistung.

2. Verfahren nach Anspruch 1, **dadurch gekennzeichnet, dass** das Verfahren den Schritt des Definierens eines Betriebszustands des Systems, das normal gefüllt ist, durch Bestimmen, innerhalb welcher Grenzen bestimmte Parameter des Systems (2) variieren können, umfasst; wobei diese Parameter eine Druckänderung an dem Ausdehnungsgefäß (8) bei Abwesenheit von Luftblasen oder Lufttaschen in dem System (2) oder mit einer akzeptablen Menge der Blasen oder Taschen betreffen; wobei eine solche Druckänderung unter Berücksichtigung einer Zunahme oder Abnahme des Flüssigkeitsvolumens im System (2) als Folge einer Temperaturänderung und/oder als Folge der Zugabe oder des Verlusts von Flüssigkeit in dem System (2) durch Nachfüllen oder als Folge eines Lecks auftreten kann.

3. Verfahren nach einem oder mehreren der vorhergehenden Ansprüche, **dadurch gekennzeichnet, dass** die Parameter des Systems (2), die in den Analyseschritt einbezogen werden, einen oder mehrere der nachfolgend aufgeführten Parameter darstellen können:
- die Größe oder Amplitude einer oder mehrerer Druckänderungen, die gemessen wurden;
- die Größe oder Amplitude einer oder mehrerer gemessener Druckänderungen, dividiert durch die Zeit, die zwischen aufeinanderfolgenden Messungen einer Druckänderung verstrichen ist;
- eine Änderung der Temperatur der Flüssigkeit, die gemessen wurde; und/oder
- einen Betriebszustand der Umwälzpumpe (3).

4. Verfahren nach einem oder mehreren der vorhergehenden Ansprüche, **dadurch gekennzeichnet, dass** in dem Analyseschritt überprüft wird, ob eine Größe einer gemessenen Druckänderung einen bestimmten Grenzwert überschreitet oder nicht.

5. Verfahren nach einem oder mehreren der vorhergehenden Ansprüche, **dadurch gekennzeichnet, dass** die Größe oder Amplitude einer oder mehrerer Druckänderungen, die gemessen wurden, geteilt durch die Zeit, die zwischen aufeinanderfolgenden Messungen einer Druckänderung verstrichen ist, einen bestimmten Grenzwert überschreitet.

6. Verfahren nach einem oder mehreren der vorhergehenden Ansprüche, **dadurch gekennzeichnet, dass** eine Anzahl von Messungen der Druckänderung an der Stelle, an der sich das Ausdehnungsgefäß (8) befindet, in den Analyseschritt einbezogen wird.

7. Verfahren nach einem oder mehreren der vorhergehenden Ansprüche, **dadurch gekennzeichnet, dass** ein Signal des Drucks (P) an dem Ausdehnungsgefäß (8) gemessen wird; wobei Signalverarbeitungstechniken verwendet werden, um das Signal, das gemessen wurde, zu analysieren und um die Parameter, die oben für den Analyseschritt erwähnt wurden, zu bestimmen oder zu berechnen.

8. Verfahren nach einem oder mehreren der vorhergehenden Ansprüche, wobei die Signalverarbeitung das Unterteilen des gemessenen Signals in seine Frequenzkomponenten umfasst.

9. Verfahren nach einem oder mehreren der vorhergehenden Ansprüche, **dadurch gekennzeichnet, dass** in dem Fall, dass die Druckänderung oder die Druckänderungen, die an dem Ausdehnungsgefäß (8) gemessen wurden, nicht einem Betriebszustand des Systems (2) entsprechen, das normal gefüllt ist, die Erzeugung einer Ausgabe, die aus einer oder mehreren der nachfolgend aufgeführten Möglichkeiten besteht:
- das Erzeugen eines Alarms;
- ein Eingriff in das System (2), indem es automatisch einer Spülung unterzogen wird;
- ein Eingriff in das System (2), indem es automatisch heruntergefahren wird.

10. Verfahren nach einem oder mehreren der vorhergehenden Ansprüche, **dadurch gekennzeichnet, dass** die Erzeugung einer Ausgabe darin besteht, dass auf einem Monitor (38) oder Bildschirm für einen Benutzer eine Anzeige bezüglich der Analyse, die durchgeführt wurde, erzeugt wird.

11. Verfahren nach einem oder mehreren der vorhergehenden Ansprüche, **dadurch gekennzeichnet, dass** das System (2), auf das das Verfahren angewendet wird, durch eine Anlage (1) realisiert wird, die eine der nachfolgend angegebenen Anlagen oder eine Kombination davon darstellt, nämlich:
- eine Heizanlage (1);
- eine Kühlanlage; und/oder
- eine HLK-Anlage.

12. Detektor (23), der dazu bestimmt ist, Luftblasen oder Lufttaschen automatisch zu erkennen, der zu der Durchführung des Verfahrens nach einem der Ansprüche 1 bis 11 ausgebildet ist, **dadurch gekennzeichnet, dass** der Detektor (23) mindestens die nachfolgend aufgeführten Elemente umfasst:
- einen Druckwandler (25), mit dem der Druck (P), der an dem Ausdehnungsgefäß (8) herrscht, zu regelmäßigen Zeitpunkten im Laufe der Zeit gemessen werden kann;
- ein Vergleichsmittel (27), das dazu bestimmt ist, eine Änderung des Drucks an dem Ausdehnungsgefäß (8) zu erfassen, die mit dem Druckwandler (25) gemessen wurde;
- Bestimmungsmittel (29), die dazu bestimmt sind, Parameter des Systems (2) zu bestimmen, die eine Druckänderung oder Druckänderungen an dem Ausdehnungsgefäß (8) unter den Bedingungen einer unveränderten Flüssigkeitsmenge in dem geschlossenen Kreislauf (4) betreffen;
- eine Analyseeinrichtung (35), die bei Erfassung einer solchen Druckänderung durch die Vergleichseinrichtung (27) aktiviert wird und mit der untersucht werden kann, ob die Parameter, die mit dem Bestimmungsmittel (29) bestimmt werden, in die Grenzen fallen, die einem Betriebszustand des Systems (2) entsprechen, der normalerweise gefüllt ist; und
- ein Ausgabemittel (36), das dazu bestimmt ist, eine Ausgabe an einen Benutzer auf der Grundlage der durchgeführten Analyse zu erzeugen.

13. Detektor (23) nach Anspruch 12, **dadurch gekennzeichnet, dass** die Bestimmungsmittel (29) eine Messausrüstung umfassen, die es ermöglicht, einen oder mehrere der Parameter des Systems zu messen und aufzuzeichnen, die im Folgenden angegeben sind, nämlich:
- die Größe oder Amplitude einer oder mehrerer Druckänderungen, die gemessen wurden;
- die Größe oder Amplitude einer oder mehrerer gemessener Druckänderungen, dividiert durch die Zeit, die zwischen aufeinanderfolgenden Messungen einer Druckänderung verstrichen ist;
- eine Änderung der Temperatur der Flüssigkeit, die gemessen wurde; und/oder
- einen Betriebszustand der Umwälzpumpe (3).

14. Anlage (1), **dadurch gekennzeichnet, dass** sie mindestens einen Detektor (23) nach Anspruch 12 oder 13 umfasst.

## Revendications

1. Procédé destiné à la détection automatique de bulles d'air ou de poches d'air dans un système (2) dans lequel est incorporé un vase d'expansion (8) et système (2) dans lequel un liquide est pompé par l'intermédiaire d'une pompe de mise en circulation (3) lorsqu'on utilise ledit système ; dans lequel un tel système (2) est équipé d'un circuit fermé (4) formé par des conduits (5) et/ou par un équipement (6) destiné(s) à des liquides, d'une manière telle que le liquide peut s'écouler ; dans lequel la pompe de mise en circulation (3) est placée dans le circuit fermé (4) ; dans lequel l'équipement (6) comprend une chaudière (7) qui est placée après la pompe de mise en circulation (3) ; et dans lequel le vase d'expansion (8) est raccordé au circuit fermé (4) pour prendre en compte des changements de volume du liquide ; **caractérisé en ce que** le procédé est un procédé automatique qui est constitué au moins par le fait de :
- mesurer la pression (P) à l'endroit où se trouve le vase d'expansion (8) à des moments réguliers, et ceci avec une quantité inchangée de liquide dans le circuit fermé (4) ;
- en présence d'un changement de pression au niveau du vase d'expansion (8), mettre en place une analyse qui consiste à examiner le fait de savoir si un ou plusieurs paramètres du système (2), qui concernent un ou plusieurs changements de pression qui ont été mesurés, rentrent dans certaines limites qui correspondent à un état du système (2) en cours d'activation, qui est rempli normalement ; et
- générer une sortie en fonction de l'analyse effectuée ;
dans lequel, en présence d'un changement de pression au niveau du vase d'expansion (8), on détermine de manière simultanée un état de fonctionnement de la pompe de mise en circulation (3), qui peut représenter un ou plusieurs des états de fonctionnement indiqués ci-après ;
- le démarrage de la pompe de mise en circulation (3) ;
- l'arrêt de la pompe de mise en circulation (3) ;
- un état dans lequel la pompe de mise en circulation est stationnaire (3) ; et/ou
- le fonctionnement de la pompe de mise en circulation (3) avec une vitesse normale ou avec une puissance nominale.

2. Procédé selon la revendication 1, **caractérisé en ce que** le procédé comprend l'étape dans laquelle on définit un état de fonctionnement du système, qui est rempli normalement, en déterminant en deçà de quelles limites certains paramètres du système (2) peuvent varier ; dans lequel ces paramètres concernent un changement de pression au niveau du vase d'expansion (8) en l'absence de bulles d'air ou de poches d'air dans le système (2) ou avec une quantité acceptable desdites bulles ou desdites poches ; dans lequel un tel changement de pression peut se produire en prenant en compte une augmentation ou une diminution du volume de liquide dans le système (2) suite à un changement de température et/ou suite à l'addition ou à la perte de liquide dans le système (2) du fait d'une recharge ou du fait d'une fuite.

3. Procédé selon une ou plusieurs des revendications précédentes, **caractérisé en ce que** les paramètres du système (2) qui sont inclus dans l'étape d'analyse peuvent représenter un ou plusieurs des paramètres indiqués ci-après :
- l'importance ou l'amplitude d'un ou de plusieurs changements de pression qui ont été mesurés ;
- l'importance ou l'amplitude d'un ou de plusieurs changements de pression qui ont été mesurés, divisée par le laps de temps qui s'est écoulé entre des mesures successives d'un changement de pression ;
- un changement de la température du liquide qui a été mesuré ; et/ou
- un état de fonctionnement de la pompe de mise en circulation (3).

4. Procédé selon une ou plusieurs des revendications précédentes, **caractérisé en ce que**, au cours de l'étape d'analyse, on vérifie le fait de savoir si une importance d'un changement de pression qui a été mesuré dépasse une certaine valeur limite ou non.

5. Procédé selon une ou plusieurs des revendications précédentes, **caractérisé en ce que** l'importance ou l'amplitude d'un ou de plusieurs changements de pression qui ont été mesurés, divisée par le laps de temps qui s'est écoulé entre des mesures successives d'un changement de pression dépasse une certaine valeur limite.

6. Procédé selon une ou plusieurs des revendications précédentes, **caractérisé en ce qu'**un nombre de mesures de changement de pression à l'endroit où se trouve le vase d'expansion (8) est inclus dans l'étape d'analyse.

7. Procédé selon une ou plusieurs des revendications précédentes, **caractérisé en ce qu'**un signal de la pression (P) au niveau du vase d'expansion (8) est mesuré; dans lequel des techniques de traitement de signaux sont utilisées pour analyser le signal qui a été mesuré et pour déterminer ou pour calculer les paramètres qui ont été mentionnés ci-dessus pour l'étape d'analyse.

8. Procédé selon une ou plusieurs des revendications précédentes, dans lequel le traitement du signal consiste à subdiviser signal qui a été mesuré, en ses composantes de fréquence.

9. Procédé selon une ou plusieurs des revendications précédentes, **caractérisé en ce que**, dans le cas dans lequel le changement de pression ou les changements de pression qui ont été mesurés au niveau de vase d'expansion (8) ne correspondent pas à un état de fonctionnement du système (2) qui est rempli normalement, la génération d'une sortie est constituée par un ou plusieurs des possibilités indiquées ci-après :
- la génération d'une alarme ;
- une intervention sur le système (2) en le soumettant à une purge de manière automatique ;
- une intervention sur le système (2) en le soumettant un arrêt manière automatique.

10. Procédé selon une ou plusieurs des revendications précédentes, **caractérisé en ce que** la génération d'une sortie est constituée par la génération d'une indication sur un moniteur (38) ou un écran destiné à un utilisateur, concernant l'analyse qui a été effectuée.

11. Procédé selon une ou plusieurs des revendications précédentes, **caractérisé en ce que** le système (2) auquel s'applique le procédé est réalisé par l'intermédiaire d'une installation (1) qui représente une des installations indiquées ci-après une de leurs combinaisons, à savoir :
- une installation de chauffage (1) ;
- une installation de refroidissement ; et/ou
- une installation de type CVC.

12. Détecteur (23) destiné à détecter de manière automatique des bulles d'air ou des poches d'air, qui est configuré pour mettre en œuvre le procédé selon l'une quelconque des revendications 1 à 11, **caractérisé en ce que** le détecteur (23) comprend au moins les éléments indiqués ci-après :
- un transducteur de pression (25) avec lequel la pression (P) qui règne au niveau du vase d'expansion (8) peut être mesurée à des moments réguliers au cours du temps ;
- un moyen de comparaison (27) qui est destiné à détecter un changement de pression au niveau du vase d'expansion (8), qui a été mesuré avec le transducteur de pression (25) ;
- des moyens de détermination (29) qui sont destinés à déterminer des paramètres du système (2) qui concernent un changement de pression ou des changements de pression au niveau du vase d'expansion (8) dans des conditions d'une quantité de liquide inchangée dans le circuit fermé (4) ;
- des moyens d'analyse (35) sont activés lors d'une détection d'un tel changement de pression par le moyen de comparaison (27), et avec lesquels il est possible d'examiner le fait de savoir si les paramètres qui sont déterminés avec le moyen de détermination (29) rentrent dans les limites qui correspondent à un état de fonctionnement du système (2) qui est rempli normalement ; et
- un moyen de sortie (36) qui est destiné à générer une sortie en direction d'un utilisateur en fonction d'analyse qui a été réalisée.

13. Détecteur (23) selon la revendication 12, **caractérisé en ce que** les moyens de détermination (29) comprennent un équipement de mesure qui permet de mesurer et d'enregistrer un ou plusieurs des paramètres du système, qui sont indiqués ci-après, à savoir :
- l'importance ou l'amplitude d'un ou de plusieurs changements de pression qui ont été mesurés ;
- l'importance ou l'amplitude d'un ou de plusieurs changements de pression qui ont été mesurés, divisée par le laps de temps qui s'est écoulé entre des mesures successives d'un changement de pression ;
- un changement de la température du liquide qui a été mesuré ; et/ou
- un état de fonctionnement de la pompe de mise en circulation (3).

14. Installation (1), **caractérisée en ce qu'**elle comprend au moins un détecteur (23) selon la revendication 12 ou 13.
